# EUROPEAN PATENT SPECIFICATION

(11) **EP 0 469 485 B1**
(45) Date of publication and mention of the grant of the patent: **04.11.1998**
(21) Application number: 91112616.7
(22) Date of filing: 26.07.1991
(51) Int. Cl.: G10L 5/06

(54) **Language processing system using an expanded LR parser**
Sprachverarbeitungssystem mit Gebrauch von einer ausgebreiteten LR-Analyseeinrichtung
Dispositif de traitement du langage utilisant un analyseur gauche-droite étendu

(30) Priority: 31.07.1990 JP 203541/90
(43) Date of publication of application: 05.02.1992
(73) Proprietor: KABUSHIKI KAISHA TOSHIBA, Kawasaki-shi, Kanagawa-ken 210 (JP)
(72) Inventor: Nitta, Tsuneo, c/o Intellectual Property Division, Minato-ku, Tokyo 105 (JP)
(74) Representative: Henkel, Feiler, Hänzel

(56) References cited:
- EP-A- 0 313 973
- ICASSP '88 IEEE INTERNATIONAL CONFERENCE ON ACOUSTICS, SPEECH AND SIGNAL PROCESSING 11 April 1988 , NEW YORK (USA) pages 275 - 278 XP000272572 W.H. WARD ET AL. 'PARSING SPOKEN PHRASES DESPITE MISSING WORDS'
- COMPUTER SPEECH AND LANGUAGE vol. 4, no. 4 , October 1990 , LONDON pages 297 - 323 XP000202885 J.H. WRIGHT 'LR PARSING OF PROBABILISTIC GRAMMARS WITH INPUT UNCERTAINTY FRO SPEECH RECOGNITION'

## Description

This invention relates to a spoken- or written-language processing system using an expanded LR parser for performing a highly accurate recognition of words or sentences in oral or written form.

As language processing systems, LR parsers have been well known.

The LR parser recognizes speech or letters by using speech segment labels, phoneme labels, syllable labels, or letter labels. Conventionally, if one or more labels in a label sequence were modified because of, for example, insertion, deletion or substitution of one or several labels, such modification could not be coped with properly, resulting in poor recognition of words or sentences. For example, any deletion of a label would stop recognizing operation where it occurred, making it impossible to improve the recognition rate.

Accordingly, the object of the present invention is to provide a language processing system using an expanded LR parser with a high recognition rate, which enables a highly accurate recognition of words and sentences even when a label or labels are modified.

The foregoing object is accomplished by a language processing system, comprising: means for converting an input speech or character pattern into a corresponding input label sequence; a first LR (left-right) table for prescribing a grammatical rule of the input speech or character pattern; a second LR table for prescribing action and destination of a label in the input label sequence; a third LR table for prescribing contents of possible insertion, deletion and substitution of a label in the input label sequence; and parsing means for obtaining candidates of the input speech or character pattern by referring to input label sequence and contents of the first to third LR tables, wherein the parsing means is for checking the third LR table for possible insertions, deletions and substitutions when encountering a blank part in the input label sequence that has no corresponding data in the second LR table.

This invention can be more fully understood from the following detailed description when taken in conjunction with the accompanying drawings, in which:
Fig. 1 is a block diagram for a language processing system according to an embodiment of the present invention;
Fig. 2 shows an example of a grammatical rule table to be stored as an LR table of Fig. 1;
Fig. 3 shows an example of an action destination table to be stored as another LR table of Fig. 1;
Figs. 4 and 6 illustrate examples of label sequences obtained from a phoneme-verifying section of Fig. 1;
Fig. 5 illustrates how the expanded LR parser recognizes words and a sentence;
Fig. 7 shows an example of an insertion, deletion and substitution table to be stored as still another LR table of Fig. 1;
Fig. 8 is a block diagram for a language processing system according to another embodiment of the present invention; and
Fig. 9 illustrates an example of a modification table to be stored as a third LR table of Fig. 8 embodiment.

An embodiment of the present invention will be explained, referring to the accompanying drawings. In this embodiment, a Japanese sentence, 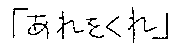 pronounced as [∂re 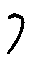 kure] is input as an input speech.

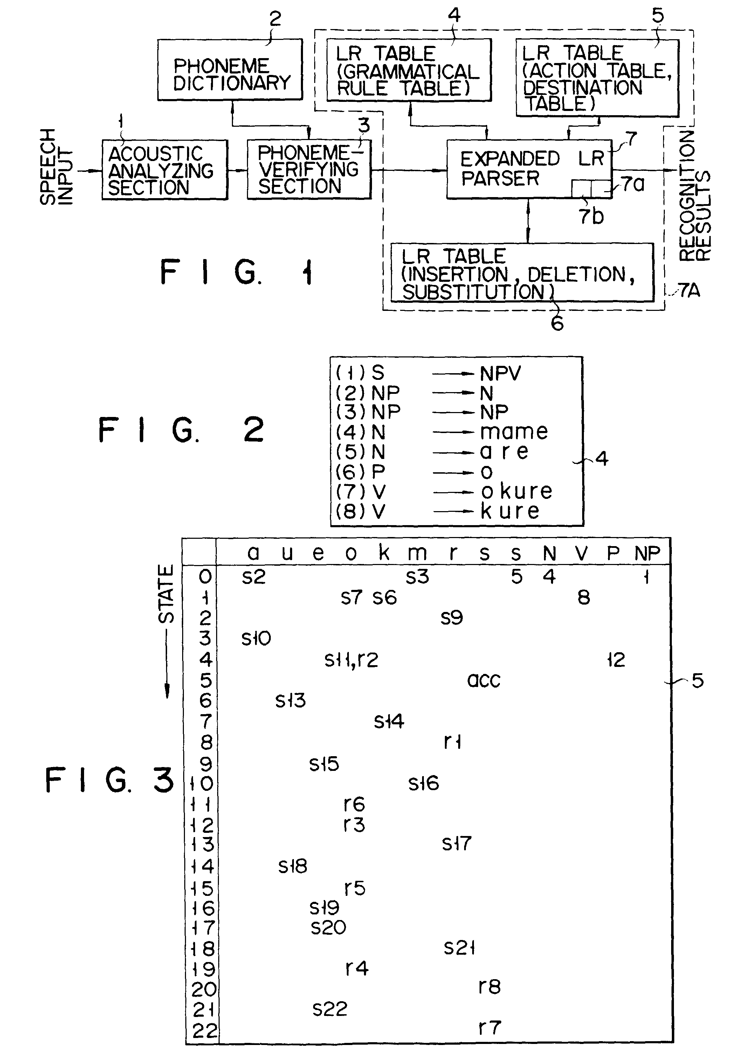

Fig. 1 is a block diagram for a speech recognition system that uses a continues speech recognition system employing an expanded LR parser according to one embodiment of the present invention for recognizing the input speech 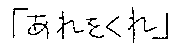 .

As illustrated, a phoneme label forming section including an acoustic analyzing section 1 that analyzes feature parameters of the speech input signal from a microphone with a band-pass filter (BPF) or a linear predictive coding circuit (LPC); a phoneme dictionary 2 that stores reference patterns for individual phonemes and transition networks; and a phonemic verification section 3 that produces label sequences (label symbol strings) as phoneme sequences by performing a verification operation using feature parameters extracted from the acoustic analyzing section 1 and the reference pattern and transition networks in the phoneme dictionary 2 is provided. A phonemic label forming section described in, for example, U.S. Patent No. 4,888,823 invented by the same inventor as the present application may be used as the section 1-3. Further, a recognition section 7A includes an LR table 4 (see Fig. 2) that acts as a grammatical rule table that stores grammatical rules previously, an LR table 5 (see Fig. 3) that acts as an action and destination table that stores information on how to operate and where to go on, an LR table 6 that acts as an insertion, deletion and substitution table that stores rules concerning phonemic insertion, deletion, and substitution, which are previously obtained by analyzing a huge amount of speech data; and an expanded LR parser 7 that recognizes the phoneme sequences, obtained from the phoneme-verification section 3 by referring to the grammatical rule table 4, action and destination table 5, and the insertion, deletion and substitution table 6. The expanded LR parser 7 contains a stack 7a and a pointer 7b made up of registers, which store label sequences, respectively.

One example of a concrete structure of the sections, 1, 2 and 3 of the embodiment of Fig. 1 is shown in U.S. Patent No. 4,888,823. The system of the present invention may be applicable to recognize words or sentences in oral or written form. In this first embodiment, the speech input signal is supplied to an A/D converter shown in Fig. 1 of the U.S. Patent No. 4,888,823. The structure of the sections 1-3 of Fig. 1 is referred to that shown in the U.S. Patent No. 4,888,823 and to detailed description thereof may be omitted here.

The phoneme verification section 3 outputs a candidate of a phoneme sequence of the input speech signal supplied to the acoustic analyzing section 1. The output of the section 3 is supplied to the expanded LR parser 7 provided in the recognition section 7A.

The parser 7 is based on LR syntax analyzing techniques and performs analysis, referring to a table including an action table and a destination table. In Fig. 1, the action table and the destination table are combined and shown as a single action and destination table 5. The action table is used to determine the next action, ACTION (s, a), the parser 7 should take on the basis of the parser's present state "s" and the input phoneme "a." There are four actions that the parser 7 can take: (1) shift: s; (2) reduce: r; (3) accept: acc; and (4) error. "shift" is to load the parser's state symbol into the stack 7a, and "reduce" is to arrange the symbols in the stack 7a according to the grammatical rules. "accept" means that the analysis of the input phoneme sequence has been completed, and "error" indicates that the phoneme sequence has been rejected. The destination table is used to determine the next destination state GOTO (s, A) that the parser 7 should take.

The parser 7 has an input pointer and state stack 7a that indicate how far the input phoneme sequence has been processed. The state stored at the top of the stack 7a is the present state of the parser 7. The parser 7 deals with the input phoneme sequence in the following procedure:
(1) Initialization: Place the input pointer at the head of the input phoneme sequence. Push "0" in the state stack 7a.
(2) Check for ACTION (s, a) in connection with the symbol "a" specified by the present state sa.
(3) If ACTION (s, a) = "shift," then push GOTO (s, a) in the state stack 7a and then increment the input pointer 7b by one.
(4) If ACTION (s, a) = "reduce n," pop states from the state stack 7a by the number of the grammatical symbols appearing at the right column of the nth grammatical rule in the table 4 of Fig. 2. The next GOTO (s', A) is obtained from the state "s'" at the top of the stack 7a and the grammatical symbol "A" appearing at the left column of the nth grammatical rule in the table 4 of Fig. 2 and push it in the stack 7a.
(5) If ACTION (s, a) = "accept," the analysis is completed.
(6) If ACTION (s, a) = "error," the analysis is unsuccessful.
(7) Return to step (2).

The action and destination table can be mechanically constructed using the grammatical rules. With such LR syntax analyzing techniques, if the grammatical rules are ambiguous (i.e., a unique destination is not determined), such ambiguity cannot be dealt with, meaning that it is impossible to process a plurality of candidates that appear during recognition of speech or letters.

Therefore, a generalized LR (hereinafter, abbreviated as GLR) syntax analyzing techniques are used in the embodiments of this invention to handle ambiguous grammatical rules.

These techniques allow a plurality of actions to be written into each column in the operation table used in LR syntax analyzing techniques; when a description of more than one action is specified, they carry parallel processing of individual actions to perform more than one analysis simultaneously. Use of these techniques makes it possible to completely analyze all languages including natural languages that have ambiguous aspects.

Fig. 2 shows the table 4 containing grammatical rules in which 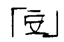 or 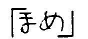 : [mame], 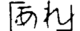 : [are] are defined as nouns, and 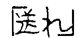 or 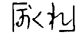 :[ 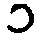 kure], 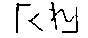 : [kure] are defined as verbs, in Japanese language. Fig. 3 illustrates an example of the grammatical rules of Fig. 2 converted into the table 5 (an action and destination table) to be used in GLR syntax analyzing techniques. The destinations for the terminal symbols (illustrative words: mame (bean in English): noun, are (that in English): noun, o (a particle introducing the objective case in Japanese), okure (send) in English: verb, and kure (give in English: verb)) of Fig. 2 are given in the action table of Fig. 3. For example, "s2" represents a shift action after which the parser 7 goes to state 2 in states 0-22. "r5" indicates the execution of a reduce action according to the fifth grammatical rule; in this case, "are (that)" is reduced to "N (noun)." "acc" represents an accept action, and all blanks in Fig. 3 indicate errors. "$" in the column of input labels indicates the end of input.

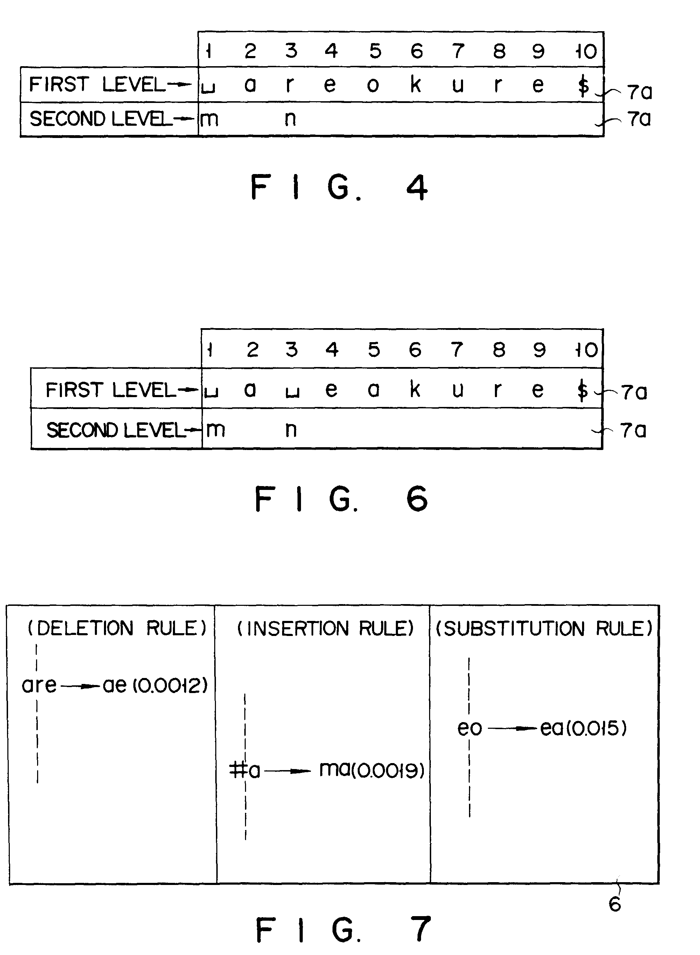

It is assumed that phoneme recognition by the speech recognition system has produced label sequences including a plurality of candidates (true, in the case) as shown in Fig. 4 for the input speech "areokure". For these label sequences, how the GLR syntax analyzing algorithm works will be explained, referring to Figs. 2, 3, and 5. The grammatical rules are previously converted into the LR tables (the operation table and the destination table). The GLR parser 7 checks all phonemes in the single line of state 0 from beginning to end and selects all phonemes specified for "shift" or "reduce" (Fig. 3).

In the example of Fig. 3, the pointer 7b first points the state 0. In the first line of the state 0, a symbol "S2" is obtained at the first label "a". After "a" is loaded into the stack 7a (see Fig. 5), state 2 is checked. In state 2, since a symbol "S9" is obtained at the label "r" in the input label sequence (label symbol string), the "r" is loaded in the stack 7a and then state 9 is checked. In the state 9, a symbol "S15" is obtained at a label "e". After the label "e" is stacked in the stack 7a, the parser 7 goes to the state 15 at which a symbol "r5" is obtained. Once "are" is loaded into the stack 7a, in state 15, "reduce" is specified in the action table, so that the 5th grammatical rule (Fig. 2) is applied. Because "are" is a noun (N) according to the rule of Fig. 2, it is reduced as a symbol "N" on the stack 7a (Fig. 5). Then, when check is made on the place (the line of state 0) corresponding to N in the destination table of Fig. 3, it is found that state 4 has been specified, so that the search of the action table of Fig. 3 is resumed. With such operation, two sentences of the same announcement, 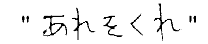 and 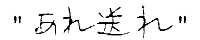 are accepted. In addition to this, check is also made on another action represented by a symbol "S3" (shift 3) in the first line of the initial state 0 for a similar search, so that the sentences of the same announcement 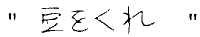 and 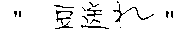 are accepted as shown in Fig. 5.

When the parser 7 described above is applied to speech- or character-recognition, recognition performance of labels (phoneme labels, in this case) has a direct effect on the performance of the language processing system. For this reason, in speech recognition, the GLR parser is used for prediction of the next phoneme, while a likelihood (probability or score) of a single phoneme obtained by top-down prediction is calculated for each phoneme by phoneme-recognition techniques such as by using an HMM (Hidden Markov Model).

The operation of the system of Fig. 1 with such a configuration having an LR table 6 will now be explained. When the expanded LR parser 7 encounters a blank part in the sequence that has no corresponding data in the action/destination table 5, it checks the insertion, deletion, and substitution tables in the LR table 6 for possible insertions, deletions, and substitutions of a label or labels. When it finds a corresponding one, then it loads the phoneme label in the action/destination table 5 into the stack 7a. In the case of insertion of a label, it judges that one of the input phoneme label is erroneously inserted and increments the pointer 7b for the input sequence by one. When the phoneme label indicated by the pointer 7b coincides with the phoneme label listed in the action/destination table and applies to the insertion rule in the LR table 6 of Fig. 7, the phoneme label is loaded into the stack 7a.

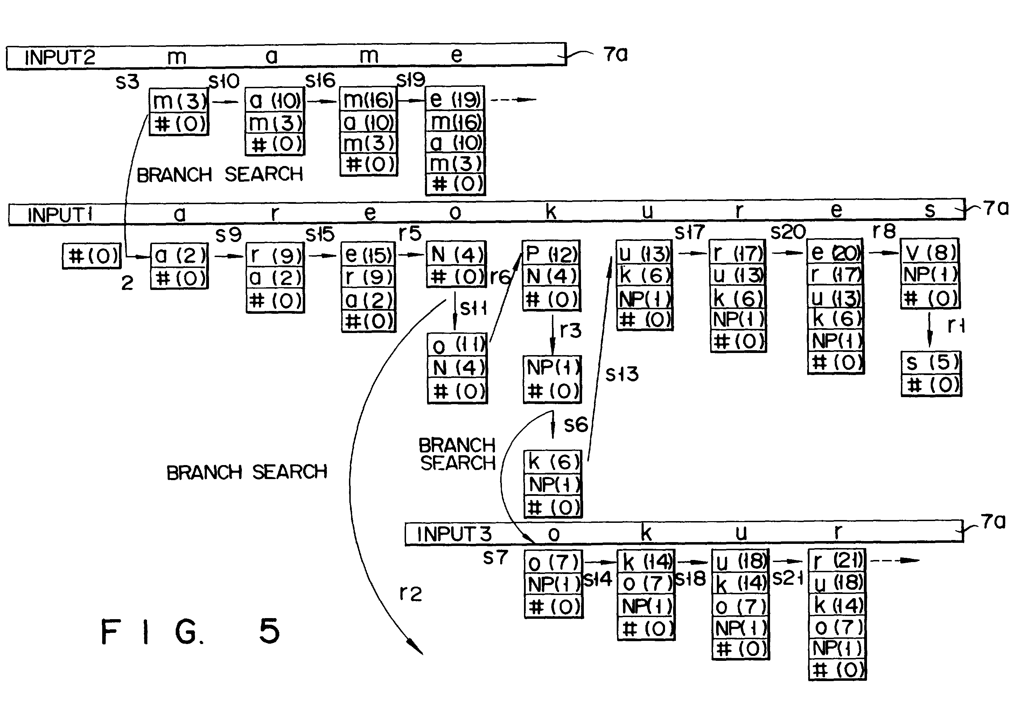

In the case of a deletion of a label "r" in the label block "are" as shown in Fig. 6, the phoneme label "r" that should come next to the label "a" is read in advance. When the read phoneme label "r" applies to the omission rule in the LR table 6 of Fig. 7, the label "r" is loaded into the stack 7a.

After the expanded LR parser 7 loads "a" into the stack 7a, it checks the action/destination table 5, the LR table 5, for state 2 in Fig. 3. In state 2, through the input label sequence has no "r" in it as shown in Fig. 6, the expanded LR parser 7 assumes that "r" has been found and reads the next symbol "s9" in advance. In state 9, judging that "e" exists at the symbol "S15", the expanded LR parser 7 searches the omission rule item in the LR table 6 for entries related to "are" in Fig. 7. In this search, the expanded LR parser 7 loads "are" into the stack 7a when confirming that the omission of "r" from the label block "are" may turn to "ae", whereas it discontinues the search when finding no corresponding entries in the omission rule item in the LR table 6 of Fig. 7.

In this case, the expanded LR parser 7 predicts the label block "are" from the omission rule item in the LR table 6, making use of the advance read function. Then, it can refer to deletion rule from the predicted label sequence to cope with imperfect labels. Similarly, the expanded LR parser 7 can cope with insertions substitutions by searching through the insertion rule item and the substitution rule item in the LR table 6.

As noted above, based on the input label sequence that has errors such as insertions, deletions, or substitution, the expanded LR parser 7 can efficiently search the rule tables concerning insertion, deletion, and substitution for acceptable words and sentences.

The recognition operation proceeds in this way until the expanded LR parser 7 outputs the finally obtained sentence as a result of recognition.

Values of statistical probability obtained by processing large quantities of documents may be applied to the LR table 4 as the grammatical rule table or to the LR table 5 as the action/destination table. The value in the parentheses on the right side of each rule item in the LR table 6 represents the value of probability or the degree of certainty when the rule of Fig. 7 is applied. Those values of probability are previously obtained from the frequency of application of each rule in a huge amount of actual speech signal. They provide likelihood of words, phrases, and sentences, or normally an accumulation of logarithmic values of probability or degree of certainty, which allows the most probable word, phrase, or sentence to be obtained.

The expanded LR parser 7 can prevent the searching space from increasing significantly by canceling the search for phonemes with low probability using the probability values in the phoneme scores and LR tables 4, 5, and 6.

While in the above embodiment, insertions, deletions, and substitutions in label sequences are corrected, other approaches may be possible. For example, in addition to coping with the above errors in label sequences, the prediction of label sequences including their modifications may be made, followed by the supply of the resulting label sequences including the predicted modifications to the phoneme-verification section. With this approach, after prediction of label sequences, a highly accurate recognition of label sequences can be made, taking into account the preceding and subsequent label sequences that make up environment.

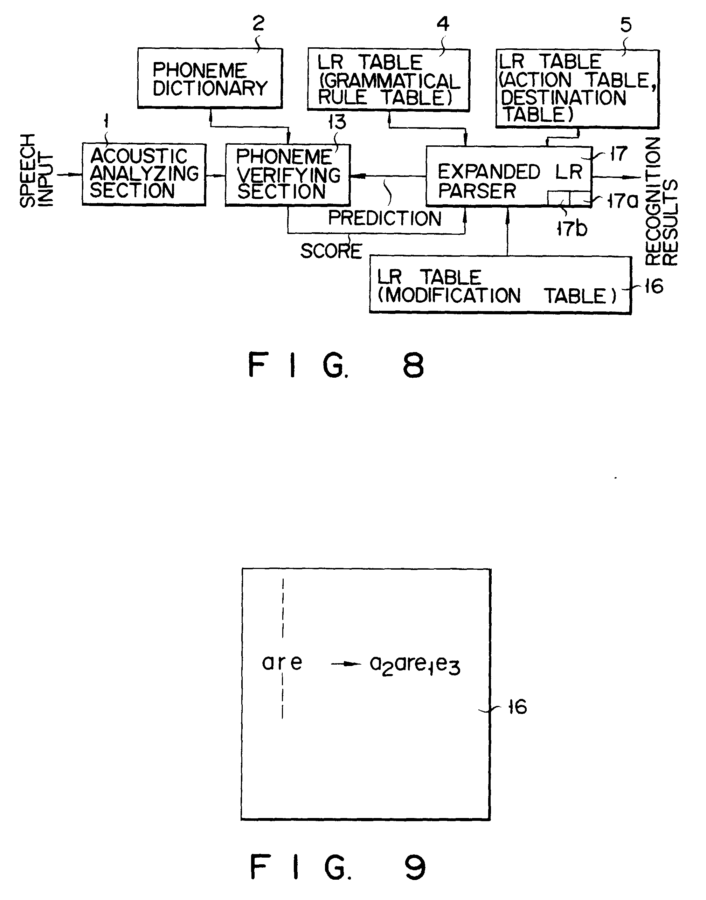

For example, a speech recognition system of Fig. 8 can achieve the above functions. This system is the same as the speech recognition system of Fig. 1 in the acoustic analyzing section 1, phoneme dictionary 2, and LR tables 4 and 5. Differences between them are the phoneme-verifying section 13, LR table 16, and expanded LR parser 17 are now explained in detail.

For instance, the input speech signal is analyzed at the acoustic analyzing section 1 to obtain characteristic parameters and then supplied to the phonemic verification section 13. The phoneme-verification section 13 verifis the characteristic parameters from the acoustic analyzing section 1 with the standard patterns and transitional networks in the phoneme dictionary 2 and then supplies the resulting phoneme sequences to the expanded LR parser 17. The expanded LR parser 17 predicts the next phoneme label, and then instructs the phoneme-verification section 13 to determine the probability (score) of predicted phoneme labels existing in the input speech signal. The phoneme-verification section 13 verifies the phoneme labels in the input characteristic parameter trains with the standard patterns and transitional networks in the phoneme dictionary 2, and then returns the probability of the specified phoneme labels existing (recognition score) to the expanded LR parser 17.

The expanded LR parser 17 predicts phoneme labels sequentially by using the grammatical rule table, action/destination table in the LR tables 4 and 5, and then loads the results with scores into the stack 17a. In this case, using the advance reading function, the expanded LR parser 17a investigates the environment in which each specified phoneme label is placed, to determine whether or not the environment falls under the cases subject to modifications according to the modification table listing the phonemic modifications such as nasalizing or devoicing in the LR table 16. As the result of this, when the environment is found to come under the case where the phoneme verification is affected, the expanded LR parser 17 sends the predicted phoneme and its modification information to the phoneme-varifying section 13.

That is, when the expanded LR parser 17 predicts "are (that)" as a label block, it also predicts, on the basis of the LR table 16 as a modification table as shown in Fig. 9, that "are" can turn to "a₂are₁e₃" and then supplies this information to the phoneme-verifying section 13 rather than supplying "are" alone to the section 13. "a₂are₁e₃" represents the numbers of the standard patterns (more than one pattern exists for a single label) for "a", "r", and "e" contained in the phoneme-verifying section 13. In this case, "r" sandwiched between "a" and "e" is only interpreted as part of the pattern "are" with vowels on both sides rather than a single pattern "r." Such information on patterns modified depending on the phonemic environment is sent to the phoneme-verifying section 13.

The phoneme-verifying section 13 can perform a highly accurate verification by using the standard patterns and transitional networks in the phoneme dictionary corresponding to modification information. The analysis is continued as described above, and the finally obtained sentence is produced as the recognition result.

With this method, words and sentences can be recognized with high accuracy.

The expanded LR parser 17 can prevent the searching space from expanding significantly by canceling the search for phonemes of low probability on the basis of the phoneme score and the probability values in the LR tables 4, 5, and 16.

The rules concerning the phonemic modification table in the LR table 16 are prepared beforehand by analyzing a huge amount of speech data. The contents of the modification table may include insertions, deletion, substitutions, and the like as well as phonemic modifications such as nasalizing and devoicing.

As described above in detail, according to this invention, it is possible to provide a spoken- or written sentence-recognition system with an improved recognition rate that can cope with insertions, deletions, and substitution, that when the predicted label is recognized after a label prediction, can achieve a highly accurate recognition, taking into account the preceding and subsequent labels as environment, and that can provide a highly accurate recognition of words and sentences with an improved GLR parser.

## Claims

1. A language processing system characterized by comprising:
means (1, 2, 3) for converting an input pattern into a corresponding input label sequence;
a first LR (left-right) table (4) for prescribing a grammatical rule of said input pattern;
a second LR table (5) for prescribing action and destination of a label in said input label sequence;
a third LR table (6) for prescribing contents of possible insertion, deletion and substitution of a label in said input label sequence; and
parsing means (7) for obtaining candidates of said input pattern by referring to input label sequence and contents of said first to third LR tables,
wherein the parsing means (7) is for checking said third LR table (6) for possible insertions, deletions and substitutions when encountering a blank part in the input label sequence that has no corresponding data in the second LR table (5).

2. A language processing system according to claim 1, characterized in that said input pattern includes an input speech signal; and
said converting means (1, 2, 3) comprises:
an acoustic analyzing means (1) for extracting acoustic features of said input speech signal;
a dictionary (2) for prescribing standard acoustic features; and
means (3) for verifying said acoustic features extracted from said input speech signal and contents of said dictionary to form candidate input label train.

3. A language processing system according to claim 1, characterized in that said first LR table (4) includes means for storing first contents representing a grammatical rule including subject, verb, noun, particle and noun phrase of a sentence which is expected to be input to said language processing system; and
second contents representing selected labels corresponding to portions of said sentence, the first and second contents being prescribed to have a relationship with each other.

4. A language processing system according to claim 1, characterized in that said second LR table (5) includes means for storing contents representing actions and destinations which are being taken by said parsing means according to a relationship between respective labels in the input label sequence extracted from a sentence expected to be input to the language processing system and a present state of the parsing means.

5. A language processing system according to claim 1, characterized in that said third LR table (6) includes means for storing contents representing a relationship between specific labels at which errors including insertion, deletion and substitution are occurred and correct labels, and said errors are possible to be caused at said specific labels.

6. A language processing system according to claim 1, characterized in that said parsing means (7) includes stacking means (7a) for stacking results of said parsing means; and
said stacking means includes means for determining, in a parallel fashion, a possibility of occurrence of of the labels the insertion, deletion and substitution at a blank portion in said second LR table at which action and destination are defined, when a reference is made to the blank portion by said parsing means, and means for stacking the labels in said second LR table corresponding to said blank portion.

## Patentansprüche

1. Sprachverarbeitungssystem, dadurch gekennzeichnet, daß es aufweist:
eine Einrichtung (1, 2, 3) zum Konvertieren eines Eingabemusters in eine entsprechende Eingabemarkensequenz;
eine erste LR-(links-rechts) Tabelle (4) zum Vorgeben einer Grammatikregel des Eingabemusters;
eine zweite LR-Tabelle (5) zum Vorgeben von Aktion bzw. Wirkung und Bestimmung einer Marke in der Eingabemarkensequenz;
eine dritte LR-Tabelle (6) zum Vorgeben des Inhalts möglicher Einfügung, Widerrufung und Ersetzung einer Marke in der Eingabemarkensequenz; und
eine grammatikalische Analyseeinrichtung (7) zum Erhalten von Kandidaten des Eingabemusters durch Bezugnehmen auf die Eingabemarkensequenz und den Inhalt der ersten bis dritten LR-Tabelle,
wobei die grammatikalische Analyseeinrichtung (7) zum Überprüfen der dritten LR-Tabelle (6) auf mögliche Einfügungen, Widerrufungen und Ersetzungen hin dient, wenn in der markierten Eingabesequenz eine Leerstelle angetroffen wird, die keine entsprechenden Daten in der zweiten LR-Tabelle (5) hat.

2. Sprachverarbeitungssystem gemäß Anspruch 1, dadurch gekennzeichnet, daß das Eingabemuster ein Spracheingabesignal enthält; und
die Konvertiereinrichtung (1, 2, 3) aufweist:
eine akustische Analyseeinrichtung (1) zum Extrahieren akustischer Eigenschaften des Spracheingabesignals;
ein Wörterbuch (2) zum Vorgeben akustischer Standardeigenschaften; und
eine Einrichtung (3) zum Verifizieren der vom Spracheingabesignal extrahierten akustischen Eigenschaften und des Inhalts des Wörterbuchs, um eine Folge von Kandidateneingabemarken zu bilden.

3. Sprachverarbeitungssystem gemäß Anspruch 1, dadurch gekennzeichnet, daß die erste LR-Tabelle (4) eine Einrichtung zum Speichern eines ersten Inhaltes, der eine grammatikalische Regel einschließlich Subjekt, Verb, Substantiv, Partikel und Substantivwendung eines Satzes repräsentiert, der in das Sprachverarbeitungssystem einzugeben ist, beinhaltet; und
einen zweiten Inhalt, der ausgewählte, Teilen des Satzes zugeordnete Marken repräsentiert, wobei vorgegeben ist, daß der erste und der zweite Inhalt eine Beziehung zueinander haben.

4. Sprachverarbeitungssystem gemäß Anspruch 1, dadurch gekennzeichnet, daß die zweite LR-Tabelle (5) eine Einrichtung zum Speichern eines Aktionen und Bestimmungen repräsentierenden Inhaltes enthält, die von der grammatikalischen Analyseeinrichtung gemäß einer Beziehung zwischen jeweiligen Marken in der Eingabemarkensequenz, die aus einem in das Sprachverarbeitungssystem einzugebenden Satz extrahiert wurden, und einem aktuellen Zustand der grammatikalischen Analyseeinrichtung vorgenommen werden müssen.

5. Sprachverarbeitungssystem gemäß Anspruch 1, dadurch gekennzeichnet, daß die dritte LR-Tabelle (6) eine Einrichtung zum Speichern eines eine Beziehung zwischen speziellen, mit Fehlern einschließlich Einfügung, Widerrufung und Ersetzung behafteten Marken und korrekten Marken repräsentierenden Inhalts beinhaltet, und es möglich ist, daß die Fehler bei den speziellen Marken verursacht werden.

6. Sprachverarbeitungssystem gemäß Anspruch 1, dadurch gekennzeichnet, daß die grammatikalische Analyseeinrichtung (7) eine Stapeleinrichtung (7a) zum Stapeln der Ergebnisse der grammatikalischen Analyseeinrichtung einschließt; und
die Stapeleinrichtung (7a) eine Einrichtung zum parallelen Ermitteln eines möglichen Auftretens der Einfügung, Widerrufung und Ersetzung der Marken an einer Leerstelle der zweiten LR-Tabelle, an der keine Aktion und keine Bestimmung definiert sind, wenn von der grammatikalischen Analyseeinrichtung (7) auf die Leerstelle Bezug genommen wird, und eine Einrichtung zum Stapeln der der Leerstelle entsprechenden Marken in der zweiten LR-Tabelle beinhaltet.

## Revendications

1. Système de traitement du langage caractérisé en ce qu'il comporte:
- des moyens (1,2,3) pour convertir un réseau d'entrée en une séquence d'étiquettes d'entrée correspondantes;
- une première table (4) DG (droite-gauche) pour prescrire une règle grammaticale dudit réseau d'entrée ;
- une deuxième table (5) DG pour prescrire une action et une destination d'une étiquette dans ladite séquence d'étiquette d'entrée ;
- une troisième table (6) DG pour prescrire des contenus d'insertion d'effacement et de substitution possibles d'une étiquette dans ladite séquence d'étiquettes d'entrée; et
- des moyens de partition (7) pour obtenir des candidats dudit réseau d'entrée en se référant à une séquence d'étiquettes d'entrée et aux contenus des première, deuxième et troisième tables DG,
dans lequel les moyens de partition (7) sont destinés à vérifier des insertions, effacements et substitutions possibles dans ladite table DG (6) lorsqu'une partie en blanc est rencontrée dans la séquence d'étiquettes d'entrée qui ne comporte pas de donnée correspondante dans la deuxième table DG (5).

2. Système de traitement du langage selon la revendication 1; caractérisé en ce que ledit réseau d'entrée comporte un signal vocal d'entrée; et
lesdits moyens de conversion (1,2, 3) comportent :
des moyens d'analyse acoustique (1) pour extraire des caractéristiques acoustiques dudit signal vocal d'entrée;
un dictionnaire (2) pour prescrire des caractéristiques acoustiques standard ;
des moyens (3) pour vérifier les caractéristiques acoustiques extraites du signal vocal d'entrée et les contenus du dictionnaire pour former un candidat pour constituer un train d'étiquettes d'entrée.

3. Système de traitement du langage selon la revendication 1, caractérisé en ce que ladite première table DG (4) comporte des moyens pour stocker des premiers contenus représentant une règle grammaticale incluant un sujet, un verbe, un nom, une particule et une locution nominale d'une phrase que l'on s'attend à recevoir en entrée du système de traitement du langage; et
des deuxièmes contenus représentant des étiquettes sélectionnées correspondant à des parties de ladite phrase, les premiers et deuxièmes contenus ayant une relation prescrite les uns par rapport aux autres.

4. Système de traitement du langage selon la revendication 1, caractérisé en ce que ladite deuxième table (5) DG comporte des moyens de stockage de contenus représentant des actions et destinations qui sont effectués par lesdits moyens de partition en fonction d'une relation entre des étiquettes respectives dans la séquence d'étiquettes d'entrée extraite d'une séquence attendue en entrée du système de traitement du langage et un état présent des moyens de partition.

5. Système de traitement du langage selon la revendication 1, caractérisé en ce que ladite troisième table (6) DG comporte des moyens de stockage de contenus représentant une relation entre des étiquettes spécifiques sur lesquelles se sont produites des erreurs comprenant une insertion, un effacement et une substitution, et des étiquettes correctes, lesdites erreurs pouvant apparaitre sur lesdites étiquettes spécifiques.

6. Système de traitement du langage selon la revendication 1, caractérisé en ce que lesdits moyens de partition (7) comportent des moyens d'empilement (7a) pour l'empilement des résultats desdits moyens de partition; et
lesdits moyens d'empilement (7a) comportent des moyens pour déterminer, de façon parallèle, une possibilité d'apparition d'une insertion, d'un effacement et d'une substitution des étiquettes sur une partie en blanc dans ladite deuxième table DG sur laquelle aucune action et destination n'ont été définies, lorsqu'une référence est faite à la partie en blanc par lesdits moyens de partition (7) et des moyens pour empiler les étiquettes dans la deuxième table DG correspondant à ladite partie en blanc.
